# EUROPÄISCHE PATENTSCHRIFT

(11) **EP 2 191 147 B1**
(45) Veröffentlichungstag und Bekanntmachung des Hinweises auf die Patenterteilung: **26.12.2018**
(21) Anmeldenummer: 08856468.7
(22) Anmeldetag: 27.11.2008
(51) Int. Cl.: F04F 5/52

(54) **VAKUUMERZEUGERVORRICHTUNG UND VERFAHREN ZU IHREM BETREIBEN**
VACUUM GENERATING DEVICE AND METHOD FOR THE OPERATION THEREOF
DISPOSITIF DE PRODUCTION DE VIDE, ET PROCÉDÉ POUR LE FAIRE FONCTIONNER

(30) Priorität: 04.12.2007 DE 102007058114
(43) Veröffentlichungstag der Anmeldung: 02.06.2010
(73) Patentinhaber: FESTO AG & Co. KG, 73734 Esslingen (DE)
(72) Erfinder: MEDOW, Ralf, 73728 Esslingen (DE); BRETZLER, Markus, 73540 Heubach (DE); KREHL, Yvonne, 73730 Esslingen (DE)
(74) Vertreter: Patentanwälte Magenbauer & Kollegen Partnerschaft mbB
(86) Internationale Anmeldenummer: PCT/EP2008/010057
(87) Internationale Veröffentlichungsnummer: WO 2009/071231

(56) Entgegenhaltungen:
- DE-A1-102004 047 853
- DE-B4-102004 031 924
- DE-C2- 4 229 834
- US-A- 5 617 898

## Beschreibung

Die Erfindung betrifft ein Verfahren zum Betreiben einer Vakuumerzeugervorrichtung, die eine Ejektoreinrichtung aufweist, deren Einlaß mit einem Luftversorgungskanal und deren Saugseite mit einem mit einem Sauggreifer verbundenen Saugkanal verbunden ist, und die eine zur Erfassung des im Saugkanal herrschenden Unterdruckes dienende Druckerfassungseinrichtung aufweist, wobei der im Saugkanal herrschende Unterdruck dadurch geregelt wird, dass die Luftversorgung des Einlasses zu einem Zeitpunkt t₁ abgeschaltet wird, wenn der Unterdruck einen oberen Schaltwert pₛₒ erreicht, und zu einem Zeitpunkt t₂, zu dem der Unterdruck auf einen unteren Schaltwert pₛᵤ absinkt, erneut eingeschaltet wird, bis zu einem Zeitpunkt t₃ wieder der obere Schaltwert pₛₒ erreicht wird.

Die Erfindung betrifft ferner eine Vakuumerzeugervorrichtung, mit einer Ejektoreinrichtung, die einen mit einem Luftversorgungskanal verbundenen Einlaß aufweist und über eine Saugöffnung verfügt, an die ein Saugkanal angeschlossen ist, der mit einem Sauggreifer verbunden oder verbindbar ist, ferner mit einer zur Erfassung des im Saugkanal herrschenden Unterdrukkes dienenden Druckerfassungseinrichtung, und mit einer elektronischen Regelungseinrichtung zur derartigen Regelung des im Saugkanal herrschenden Unterdruckes, dass die Luftversorgung des Einlasses abgeschaltet wird, wenn der sich aufbauende Unterdruck einen oberen Schaltwert erreicht und erneut bis zum Erreichen des oberen Schaltwertes eingeschaltet wird, wenn der Unterdruck auf einen unteren Schaltwert absinkt.

Eine derartige Vakuumerzeugervorrichtung sowie ein zu ihrem Betrieb geeignetes Verfahren der genannten Art gehen aus der DE 10 2004 031 924 B4 hervor. Die Vakuumerzeugervorrichtung enthält eine Ejektoreinrichtung, deren Einlaß über einen Luftversorgungskanal mit einer Druckluftquelle verbindbar ist, um an einer eine Saugseite definierenden Saugöffnung einen Unterdruck zu erzeugen. Der Unterdruck liegt auch an einem angeschlossenen Saugkanal an, der mit einem Sauggreifer verbindbar ist, durch den sich ein handzuhabender Gegenstand mittels Unterdruck festhalten und transportieren lässt.

Um den Druckluftverbrauch zu minimieren, kann der Luftversorgungskanal abgesperrt werden, wenn im Saugkanal ein situationsabhängig vorgegebener Unterdruck herrscht, der in der Lage ist, einen Gegenstand sicher festzuhalten. Auf Grund nicht vermeidbarer Leckage wird die Luftversorgung jedoch wieder eingeschaltet, wenn der Unterdruck auf einen ebenfalls vorgegebenen unteren Schaltwert absinkt. Ist anschließend wieder der obere Schaltwert erreicht, schaltet die Luftversorgung erneut ab, wobei sich dieser Vorgang in Abhängigkeit von der Handhabungsdauer eines Gegenstandes und auch von der Intensität der auftretenden Leckage während eines Arbeitszyklus mehrfach wiederholen kann. Gemäß DE 10 2004 031 924 B4 ist eine Überwachungseinrichtung vorhanden, die die Anzahl der vorgenannten Regelungsvorgänge erfaßt, sodass Rückschlüsse dahingehend möglich sind, ob eine verstärkte Leckage auftritt und ob folglich Störungen im System vorliegen. Es kann außerdem eine Überwachungseinrichtung vorhanden sein, mit der sich die Evakuierungszeit erfassen lässt, um eine Selbstdiagnose durchzuführen.

Diese Art der Überwachung verspricht zwar sehr zuverlässig zu sein, stellt jedoch gewisse Anforderungen an die Prozessorleistung der Auswerteelektronik und erfordert daher eine verhältnismäßig kostenaufwändige Hardware.

Aus der DE 10 2004 047 853 A1 geht eine Steuereinrichtung für ein Saugelement hervor, die eine Einrichtung zur Unterdruckerzeugung aufweist und ein Elektronikmodul enthält, das mit einem separaten Anzeige- und/oder Bediengerät in Wirkverbindung steht. Das Elektronikmodul dient unter anderem zur Überwachung von Parametern wie Evakuierungs- und Belüftungszeiten und übermittelt die gemessenen Parameter an das Anzeige- und/oder Bediengerät.

Die DE 42 29 834 C2 beschreibt ein Verfahren und eine Einrichtung zum elektrischen Verarbeiten von Vakuumdruckinformationen, wobei gemessene mit gespeicherten Druckwerten verglichen werden und darauf aufbauend eine Fehlerfeststellung stattfindet.

Die US 5,617,898 offenbart eine Anordnung von Fluiddruckvorrichtungen, die jeweils eine eigene elektronische Steuereinheit aufweisen, um einen angeschlossenen Sequenzer zu entlasten. Die Fluiddruckvorrichtungen können Displays aufweisen, um Fehlfunktionen anzuzeigen.

Die Erfindung hat sich zum Ziel gesetzt, Maßnahmen vorzuschlagen, die mit geringerem Aufwand eine zuverlässige Funktionsüberwachung einer Vakuumerzeugervorrichtung ermöglichen. Diese Aufgabe wird bei einem Verfahren der Eingangs genannten Art dadurch gelöst, dass die zwischen dem Zeitpunkt t₁ des Abschaltens der Luftversorgung und entweder dem anschließenden Wiedereinschalten zu dem Zeitpunkt t₂ oder dem anschließenden neuerlichen Abschalten der Luftversorgung zu dem Zeitpunkt t₃ verstreichende Regelungszeit erfaßt wird und mit mindestens einem vorgegebenen Referenzzeitwert verglichen wird, um in Abhängigkeit vom Vergleichsergebnis ein elektrisches Diagnosesignal zu erzeugen.

Der Erfindung wird ferner bei einer Vakuumerzeugervorrichtung der eingangs genannten Art dadurch gelöst, dass die Regelungseinrichtung über Regelungszeit-Erfassungsmittel verfügt, durch die die zwischen dem Abschalten der Luftversorgung und entweder dem anschließenden Wiedereinschalten oder dem neuerlichen Abschalten der Luftversorgung verstreichende Regelungszeit erfassbar ist, dass die Regelungseinrichtung ferner über Vergleichermittel verfügt, durch die die erfaßte Regelungszeit mit mindestens einem in Speichermitteln abgelegten Referenzzeitwert vergleichbar ist, und dass die Regelungseinrichtung über Ausgabemittel verfügt, die in Abhängigkeit vom Vergleichsergebnis der Vergleichermittel ein elektrisches Diagnosesignal ausgeben können.

Sowohl bei dem Verfahren als auch bei der insbesondere nach dem Verfahren arbeitenden Vakuumerzeugervorrichtung wird überwacht, wie lange es dauert, bis die bei Erreichen des oberen Schaltwertes abgeschaltete Luftversorgung erneut wieder eingeschaltet wird oder, nach zwischenzeitlichem erneutem Einschalten, wieder abgeschaltet wird. Diese als Regelungszeit bezeichenbare Zeitspanne ist ein Maß dafür, wie schnell sich im Saugkanal der Unterdruck abbaut und wie hoch folglich die Leckage in dem sich an die Saugseite der Ejektoreinrichtung anschließenden Systemabschnitt ist. Man kann mindestens einen auf Erfahrungswerten basierenden Referenzzeitwert hinterlegen, mit dem die erfaßte Regelungszeit vergleichbar ist, um dann in Abhängigkeit vom Vergleichsergebnis ein elektrisches Diagnosesignal zu erzeugen, das dem Nutzer Hinweise auf den aktuellen Funktionszustand gibt oder unmittelbar selbst eine oder mehrere Maßnahmen veranlaßt, beispielsweise die Ausgabe einer optischen und/oder akustischen Warnmeldung oder ein Umschalten der Luftversorgung auf Dauerbetrieb um ein unerwünschtes Abfallen eines angesaugten Gegenstandes zu verhindern.

Vorteilhafte Weiterbildungen der Erfindung gehen aus den Unteransprüchen hervor.

Zweckmäßigerweise wird ein Diagnosesignal erzeugt, wenn die Regelungszeit unter dem vorgegebenen Referenzzeitwert liegt. Das Diagnosesignal kann unmittelbar vor Ort an der Vakuumerzeugervorrichtung visualisierbar sein. Sofern die Vakuumerzeugervorrichtung an eine externe elektronische Steuereinrichtung angeschlossen ist, kann auch an diese externe Steuereinrichtung ein Diagnosesignal ausgegeben werden.

Man hat die Möglichkeit, die auftretende Leckage unter Berücksichtigung ihrer Intensität zu klassifizieren. In diesem Zusammenhang können gleichzeitig mehrere unterschiedliche Referenzzeitwerte hinterlegt sein, die mit der erfaßten Regelungszeit verglichen werden, wobei das ausgegebene elektrische Diagnosesignal davon abhängt, welcher der abgespeicherten Referenzzeitwerte mit der erfaßten Regelungszeit korreliert. Dementsprechend können Diagnosesignale in unterschiedlichen Diagnosestufen erzeugt werden, bei denen unterschiedliche Folgemaßnahmen getroffen werden. So kann beispielsweise bei einer geringeren Diagnosestufe lediglich ein Warnsignal ausgegeben werden, ohne die Funktion der Vakuumerzeugervorrichtung zu beeinträchtigen. Steigt die Leckage an und fällt sie dadurch in eine höhere Diagnosestufe, können bewußt Betriebseinschränkungen hervorgerufen werden, beispielsweise ein Umschalten auf Dauersaugen bis hin zu einem kontrollierten Abschalten der Vorrichtung bei extremer Leckage.

Von Vorteil ist es, wenn in den Saugkanal ein Rückschlagventil eingeschaltet ist, das bei abgeschalteter Luftversorgung einen unerwünschten Abbau des Unterdruckes in dem sich zwischen dem Rückschlagventil und dem Sauggreifer befindenden Systemabschnitt verhindert. Die Druckerfassungseinrichtung erfaßt hierbei zweckmäßigerweise den Unterdruck in dem zwischen dem Rückschlagventil und dem Sauggreifer verlaufenden Abschnitt des Saugkanals.

Zweckmäßigerweise ist mit dem Saugkanal ein Ausblaskanal verbunden, der eine Einspeisung von unter atmosphärischem Überdruck stehender Druckluft in den Saugkanal ermöglicht, wenn ein zuvor angesaugter Gegenstand abgelegt werden soll. Diese Maßnahme empfiehlt sich insbesondere in Verbindung mit einem in den Saugkanal eingeschalteten Rückschlagventil.

Zweckmäßigerweise kann der obere Schaltwert funktionsspezifisch vorgegeben werden. Es können Eingabemittel vorhanden sein, die dem Nutzer eine direkte Eingabe des oberen Schaltwertes ermöglichen, auf der Basis von Erfahrungswerten. In gleicher Weise kann die Möglichkeit zur Eingabe eines Hysteresewertes gegeben sein, der vom Nutzer auf Basis seiner Erfahrung als derjenige Unterdruckabfall angesehen wird, der zulässig ist, um weiterhin einen sicheren Betrieb zu gewährleisten. Der untere Schaltwert wird dann allerdings zweckmäßigerweise daraus generiert, dass zu demjenigen Wert, der sich aus der Differenz des oberen Schaltwertes und dem Hysteresewert ergibt, ein Sicherheitsdruckwert addiert wird.

Es kann auch die Möglichkeit geschaffen werden, den oberen Schaltwert und den unteren Schaltwert durch einen Einlernprozeß festzulegen. Diese Möglichkeit kann zusätzlich oder alternativ zur direkten Eingabe mittels manuell bedienbaren Eingabemitteln bestehen.

Nachfolgend wird die Erfindung anhand der beiliegenden Zeichnung näher erläutert. In dieser zeigen:
- Figur 1: in schematischer Darstellung eine bevorzugte Ausführungsform der erfindungsgemäßen Vakuumerzeugervorrichtung zur Durchführung eines erfindungsgemäßen Verfahrens, und
- Figur 2: ein Diagramm, in dem anhand eines während des Handhabens eines Gegenstandes stattfindenden Arbeitszyklus der über die Zeit aufgetragene Unterdruckverlauf im Saugkanal ersichtlich ist.

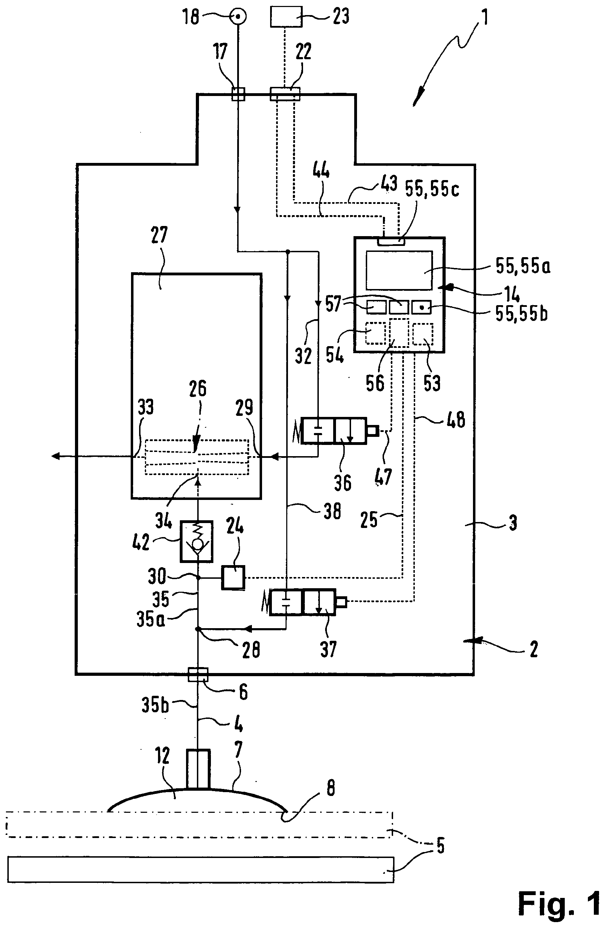

Die in ihrer Gesamtheit mit Bezugsziffer 1 bezeichnete Vakuumerzeugervorrichtung dient insbesondere dem Zweck, Gegenstände 5 mittels Unterdruck festzuhalten, damit sie zwischen verschiedenen Orten umpositioniert werden können. Sie wird beispielsweise in der Montagetechnik oder in der Verpackungsindustrie eingesetzt. In Figur 1 ist als Gegenstand 5 exemplarisch ein plattenförmiges Erzeugnis illustriert, hier in Gestalt einer dünnen Platte.

Die Vakuumerzeugervorrichtung 1 enthält eine Vakuumerzeugereinheit 2, an die mindestens ein Sauggreifer 7 angeschlossen ist. Prinzipiell kann die Vakuumerzeugervorrichtung 1 auch mit mehreren Vakuumerzeugereinheiten 2 ausgestattet sein, die auch zu einer Baugruppe zusammengefasst werden können.

Der schon erwähnte Sauggreifer 7 ist über eine Saugleitung 4 an die Vakuumerzeugereinheit 2 angeschlossen. Er kann hierbei entfernt zu der Vakuumerzeugereinheit 2 angeordnet sein. Es besteht allerdings auch die Möglichkeit, den Sauggreifer 7 unmittelbar an der Vakuumerzeugereinheit 2 anzuordnen, sodass eine starre Baugruppe vorliegt.

Bei dem Sauggreifer 7 handelt es sich exemplarisch um einen Saugnapf oder Saugteller. Er begrenzt eine eine Arbeitsöffnung 8 aufweisende Saugkammer 12 und kann derart verlagert werden, dass er mit seiner Arbeitsöffnung 8 voraus an dem handzuhabenden Gegenstand 5 zur Anlage gelangt. Im Moment der Anlage ist die Arbeitsöffnung 8 durch den Gegenstand 5 abgedeckt und die Saugkammer 12 zur Atmosphäre hin verschlossen. Dieser Zustand ist in der Zeichnung strichpunktiert angedeutet.

Das Verlagern des Sauggreifers 7 geschieht durch Verlagerung einer ihn tragenden Einrichtung, wobei es sich um die Vakuumerzeugereinheit 2 selbst handeln kann, wenn er daran befestigt ist.

An einem ein- oder mehrteiligem Hauptgehäuse 3 der Vakuumerzeugereinheit 2 befindet sich eine Luftversorgungsschnittstelle 17, die zur Einspeisung von Druckluft dient, die von einer externen Druckluftquelle 18 zur Verfügung gestellt wird. Ferner befindet sich an dem Hauptgehäuse 3 mindestens eine elektromechanische Kommunikationsschnittstelle 22 für den Austausch elektrischer Signale und für die Einspeisung der für den Betrieb der elektrischen Komponenten der Vakuumerzeugereinheit 2 benötigten elektrischen Energie. An die Kommunikationsschnittstelle 22 kann in diesem Zusammenhang eine in Figur 1 schematisch angedeutete externe elektronische Steuereinrichtung 23 angeschlossen werden.

Das für das Ergreifen eines Gegenstandes 5 erforderliche Vakuum wird unmittelbar in der Vakuumerzeugereinheit 2 erzeugt. Diese ist hierfür mit mindestens einer Ejektoreinrichtung 27 ausgestattet und beinhaltet mindestens eine nach dem Ejektorprinzip arbeitende Saugdüse 26, deren Einlaß 29 über einen Luftversorgungskanal 32 an die Luftversorgungsschnittstelle 17 angeschlossen ist.

Die Ejektoreinrichtung 27 besitzt außerdem einen zur Atmosphäre führenden Auslass 33, an den bei Bedarf ein Schalldämpfer anschließbar ist.

Schließlich verfügt die Ejektoreinrichtung 27 über eine Saugseite oder Saugöffnung 34, die über einen Saugkanal 35 an die Saugkammer 12 des Sauggreifers 7 angeschlossen ist.

Exemplarisch verläuft ein erster Kanalabschnitt 35a des Saugkanals 35 im Hauptgehäuse 3 und endet an einer Saugleitungs-Schnittstelle 6, an der in bevorzugt lösbarer Weise die Saugleitung 4 angeschlossen ist, in der sich der Saugkanal 35 mit einem zweiten Kanalabschnitt 35b bis zu der Saugkammer 12 hin fortsetzt.

In den Verlauf des Luftversorgungskanals 32 ist ein elektrisch betätigbares Steuerventil 36 eingeschaltet, das zweckmäßigerweise über eine 2/2-Wege-Funktionalität verfügt. Es kann den Luftdurchgang durch den Luftversorgungskanal 32 wahlweise absperren oder freigeben, um dadurch die Luftversorgung des Einlasses 29 der Ejektoreinrichtung 27 wahlweise abzuschalten oder einzuschalten.

Ein weiterer Luftversorgungskanal, der zur besseren Unterscheidung als Ausblaskanal 38 bezeichnet wird, kommuniziert einenends ebenfalls mit der Luftversorgungsschnittstelle 17 und ist andernends an einer Verbindungsstelle 28 mit dem Saugkanal 35 verbunden. In den Verlauf des Ausblaskanals 38 ist wiederum ein elektrisch betätigbares Steuerventil eingeschaltet, bevorzugt von der gleichen Art wie das bereits erwähnte Steuerventil 36, das aber zur besseren Unterscheidung als Ausblasventil 37 bezeichnet wird. Das Ausblasventil 37 kann wahlweise eine von zwei Stellungen einnehmen, in denen es den Luftdurchgang durch den Ausblaskanal 38 entweder absperrt oder freigibt.

In den Verlauf des Saugkanals 35, insbesondere in den ersten Kanalabschnitt 35a, ist zweckmäßigerweise ein Rückschlagventil 42 eingeschaltet. Es ist so orientiert, dass es eine Luftströmung vom Sauggreifer 7 hin zur Ejektoreinrichtung 27 zuläßt, in der Gegenrichtung jedoch verhindert. Mit anderen Worten nimmt es eine Absperrstellung ein, wenn der auf der Seite der Ejektoreinrichtung 27 anstehende Druck absolut größer ist, als der auf der Seite des Sauggreifers 7 anstehende Druck.

Das Rückschlagventil 42 sitzt in demjenigen Abschnitt des Saugkanals 35, der sich zwischen der Saugöffnung 34 und der Verbindungsstelle 28 erstreckt.

Schließlich ist noch eine Druckerfassungseinrichtung 24 an den Saugkanal 35 angeschlossen, die eine Erfassung des im Saugkanal 35 herrschenden Druckes und mithin auch des darin herrschenden Unterdruckes ermöglicht. Es handelt sich bei der Druckerfassungseinrichtung 24 insbesondere um einen Drucksensor, der den pneumatischen Druck in elektrische Drucksignale umwandelt und diese über eine gestrichelt angedeutete Signalleitung 25 einer elektronischen Regelungseinrichtunng 14 zuführt, die bevorzugt Bestandteil der Vakuumerzeugereinheit 2 ist.

Die Druckerfassungseinrichtung 24 ist zweckmäßigerweise an einer zwischen dem Rückschlagventil 42 und dem Sauggreifer 7 liegenden Anschlussstelle 30 an den Saugkanal 35 angeschlossen. Dadurch wird der im Saugkanal 35 herrschende Unterdruck auch dann zuverlässig erfaßt, wenn die Ejektoreinrichtung 27 abgeschaltet ist und die Saugöffnung 34 über den Auslass 33 mit der Atmosphäre in Verbindung steht. Vorzugsweise liegt die Anschlusstelle 30 innerhalb der Vakuumerzeugereinheit 2, kann jedoch auch außerhalb dieser platziert sein, beispielsweise in der Saugleitung 4 oder direkt im Sauggreifer 7.

Bei dem Steuerventil 36 und dem Ausblasventil 37 handelt es sich zweckmäßigerweise um Magnetventile, eine Ausbildung als Piezoventile ist jedoch ebenfalls denkbar. Zweckmäßigerweise sind sie vom Typ "normalerweise geschlossen", sodass sie im elektrisch unbetätigten Zustand die den zugeordneten Kanal absperrende Schließstellung einnehmen. Das Steuerventil 36 kann allerdings auch vom Typ "normalerweise offen" sein. Denkbar ist auch die Verwendung eines bistabilen Steuerventils (Impulsventil).

Ihre Betätigungssignale erhalten das Steuerventil 36 und das Ausblasventil 37 über je mindestens eine elektrische Steuerleitung 47, 48, durch die sie an die schon erwähnte elektronische Regelungseinrichtung 14 angeschlossen sind.

Die Regelungseinrichtung 14 steht außerdem über mindestens eine Signalübertragungsleitung 43 und zweckmäßigerweise auch eine die elektrische Energie übermittelnde Energieübertragungsleitung 44 mit der Kommunikationsschnittstelle 22 in Verbindung und kann auf diese Weise mit der externen elektronischen Steuereinrichtung 23 kommunizieren.

Der strichpunktiert angedeutete, angesaugte Gegenstand 5 wird durch das in Folge des Absaugens der Saugkammer 12 erzeugte Vakuum festgehalten. Um ihn wieder abzulegen, wird das Vakuum in der Saugkammer 12 aufgehoben. Letzeres geschieht durch Öffnen des Ausblasventils 37, sodass unter atmosphärischem Überdruck stehende Druckluft in den Saugkanal 35 eingespeist wird. Die Ejektoreinrichtung 27 wird hierbei umgangen.

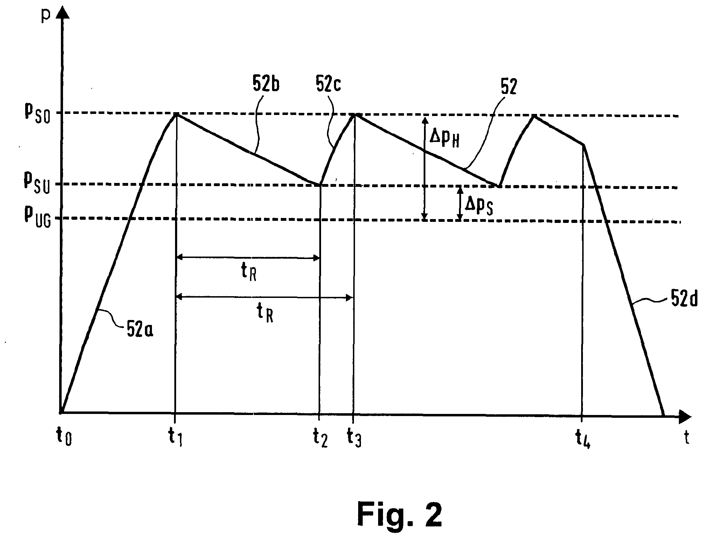

Im Folgenden wird, unter ergänzender Beschreibung weiterer Funktionalitäten und Ausstattungsmerkmale der Vakuumerzeugervorrichtung 1, eine bevorzugte Betriebsweise dieser Vorrichtung erläutert. Dies geschieht unter Bezugnahme auf das in Figur 2 gezeigte Diagramm, das anhand der in einer durchgezogenen Linie abgebildeten Kurve 52 den zeitabhängigen Verlauf des im Saugkanal 35 an der Anschlussstelle 30 herrschenden Unterdruckes p wiedergibt. Der Nullpunkt der Ordinate entspricht hier dem Atmosphärendruck.

Zu einem beliebigen Zeitpunkt t₀ herrscht im Saugkanal 35 atmosphärischer Druck. Die Ejektoreinrichtung 27 ist hierbei deaktiviert, weil das Steuerventil 36 die Schließstellung einnimmt. Auch das Ausblasventil 37 befindet sich hier in der Schließstellung.

Um anschließend einen Gegenstand 5 anzuheben, wird der Sauggreifer 7 mit seiner Arbeitsöffnung 8 an den Gegenstand 5 angesetzt und die Ejektoreinrichtung 27 aktiviert. Letzteres geschieht durch Einschalten der Luftversorgung des Einlasses 29 durch Umschalten des Steuerventils 36 in die Offenstellung. Als Folge hiervon baut sich im Saugkanal 35 gemäß dem ersten Kurvenabschnitt 52a der Figur 2 allmählich ein Unterdruck auf. Die Ejektoreinrichtung 27 bleibt hierbei solange in Betrieb, bis der im Saugkanal 35 herrschende Unterdruck einen oberen Schaltwert p_{SO} erreicht. Zu diesem Zeitpunkt t₁ wird die Luftversorgung der Ejektoreinrichtung 27 durch Schließen des Steuerventils 36 abgeschaltet.

Die elektronische Regelungseinrichtung 14 enthält Speichermittel 53, in denen der obere Schaltwert p_{SO} abgespeichert ist. Außerdem enthält sie elektronische Vergleichermittel 54, in denen der im Saugkanal 35 erfaßte Unterdruck anhand den über die Signalleitung 25 empfangenen elektrischen Drucksignalen mit dem oberen Schaltwert p_{SO} verglichen wird, um bei Erreichen dieses oberen Schaltwertes die Ejektoreinrichtung 27 zu deaktivieren.

Bei deaktivierter Ejektoreinrichtung 27 verhindert das Rückschlagventil 42 einen unerwünschten Abbau des Unterdruckes in der Saugkammer 12, weil es diese von der Ejektoreinrichtung 27 abtrennt.

Die Druckerfassungseinrichtung 24 ist an den zwischen dem Rückschlagventil 42 und der Saugkammer 12 verlaufenden Kanalabschnitt des Saugkanals 35 angeschlossen. Sofern vorliegend von der Erfassung des im Saugkanal 35 herrschenden Unterdrukkes die Rede ist, ist der Unterdruck in dem vorgenannten Kanalabschnitt zwischen dem Rückschlagventil 42 und der Saugkammer 12 zu verstehen.

Das Abschalten der Ejektoreinrichtung 27 geschieht vorwiegend zum Einsparen von Druckluft und mithin von Energie.

Auf Grund niemals gänzlich vermeidbarer Leckagen verringert sich der im Saugkanal 35 herrschende Unterdruck nach dem Abschalten der Ejektoreinrichtung 27 allmählich. In Figur 2 äußert sich dies durch einen abfallenden zweiten Kurvenabschnitt 52b. Dieser Druckabfall wird solange toleriert, wie er das Festhalten des angesaugten Gegenstandes 5 nicht gefährdet.

In den Speichermitteln 53 der Regelungseinrichtung 14 ist ein unterer Schaltwert p_{SU} hinterlegt. Sinkt der durch die Druckerfassungseinrichtung 24 im Saugkanal 35 erfaßte Druck bis auf diesen unteren Schaltwert p_{SU} ab, schaltet die Regelungseinrichtung 14 die Luftversorgung für den Einlaß 29 der Ejektoreinrichtung 27 wieder ein, sodass diese ihren Saugbetrieb wieder aufnimmt. In dem Diagramm der Figur 2 ist dies zum Zeitpunkt t₂ der Fall.

Als Folge hiervon steigt der Unterdruck im Saugkanal 35 gemäß dem dritten Kurvenabschnitt 52c erneut bis zum oberen Schaltwert p_{SO} an, bei dessen Erreichen die Regelungseinrichtung 14 die Ejektoreinrichtung 27 wiederum deaktiviert. Dies ist zum Zeitpunkt t₃ der Fall.

Der Zeitraum zwischen dem Zeitpunkt t₁ und t₃ stellt einen Regelungsvorgang dar. Je nach dem, wie stark die Leckage ist und wie lange ein Gegenstand 5 festgehalten werden muss, kann sich eine unterschiedliche Anzahl aufeinanderfolgender Regelungsvorgänge einstellen. Das Diagramm der Figur 2 gibt zwei aufeinanderfolgende Regelungsvorgänge wieder.

Der Zeitpunkt t₄ bezeichnet den Zeitpunkt, an dem das Ablegen des zuvor festgehaltenen Gegenstandes 5 initiiert wird. Hier hält die Regelungseinrichtung 14 das Steuerventil 36 in der Schließstellung und schaltet das Ausblasventil 37 in die Offenstellung um. Letzteres führt zu einem kurzfristigen Abbau des im Saugkanal 35 herrschenden Unterdruckes gemäß dem letzten Kurvenabschnitt 52d.

Die Regelungseinrichtung 14 verfügt über Ausgabemittel 55, über die sie in der Lage ist, ein zuvor erzeugtes elektrisches Diagnosesignal auszugeben, das über die für die Saugkammer 12 relevante Leckage Aufschluß gibt. Insbesondere wird dann ein Diagnosesignal erzeugt und ausgegeben, wenn ein sich aus dem zweiten und dritten kurvenabschnitt 52b, 52c zusammensetzender Regelungsvorgang innerhalb einer kürzeren Zeit - im Folgenden als "Regelungszeit" t_{R} bezeichnet - abläuft als durch einen Referenzzeitwert vorgegeben ist. Der Referenzzeitwert ist in den Speichermitteln 53 abgespeichert. Um eine solche Diagnose zu ermöglichen, enthält die Regelungseinrichtung 14 elektronische Regelungszeit-Erfassungsmittel 56, die diejenige Zeit erfassen, die zwischen den Zeitpunkten t₁ und t₃ verstreicht, also die Zeit zwischen zwei unmittelbar aufeinanderfolgenden Abschaltzeitpunkten der Luftversorgung.

In den Vergleichermitteln 54 findet ein Vergleich zwischen dem hinterlegten Referenzzeitwert und der sich konkret ergebenden Regelungszeit t_{R} statt, worauf in Abhängigkeit vom Vergleichsergebnis das schon erwähnte Diagnosesignal erzeugt und über die Ausgabemittel 55 ausgegeben wird.

Die Regelungseinrichtung 14 ist insbesondere so ausgeführt, dass ein Diagnosesignal erzeugt und ausgegeben wird, wenn die tatsächliche Regelungszeit t_{R} unter dem vorgegebenen Referenzzeitwert liegt. Derartige Gegebenheiten sind ein Anzeichen für eine übermäßige Leckage, da die Ejektoreinrichtung 27 in kürzerer Abfolge aktiviert wird, als dies bei einem ordnungsgemäßen Betrieb zu erwarten wäre.

Als mit dem Referenzzeitwert zu vergleichende Regelungszeit t_{R} kann alternativ oder zusätzlich auch der Zeitraum zwischen den Zeitpunkten t₁ und t₂ herangezogen werden, also diejenige Zeit, die zwischen dem Abschalten der Ejektoreinrichtung 27 und dem darauffolgenden Wiedereinschalten der Ejektoreinrichtung 27 verstreicht. Diese Art der Messung und Regelung hat den Vorteil, dass die tatsächliche Leckage besser ermittelbar ist, weil die für den neuerlichen Aufbau des oberen Schaltwertes erforderliche Zeit nicht in die Betrachtung mit einbezogen wird.

Das Diagnosesignal kann beispielsweise als optisches und/oder akustisches Signal ausgegeben werden. Exemplarisch ist die Vakuumerzeugervorrichtung 1 zu diesem Zweck mit Ausgabemitteln 55 in Gestalt eines Displays 55a und eines Tongenerators 55b ausgestattet. Darüber hinaus beinhalten die Ausgabemittel 55 aber auch noch eine Ausgabeschnittstelle 55c, über die das Diagnosesignal als elektrisches Signal zur weiteren Verarbeitung ausgegeben werden kann, insbesondere an die Signalübertragungsleitung 43 und über diese zu der externen elektronischen Steuereinrichtung 23.

Der Referenzzeitwert kann ab Werk fest einprogrammiert sein. Allerdings enthält die Regelungseinrichtung 14 des Ausführungsbeispiels auch manuell bedienbare Eingabemittel 57, die eine variable Eingabe vor Ort ermöglichen, sodass man den Wert variieren kann, insbesondere auch in Abhängigkeit vom Volumen der angeschlossenen Saugkammer 12.

Die Vakuumerzeugervorrichtung 1 kann auch über andere Schnittstellenmittel verfügen, die eine externe Eingabe der diversen Werte zulassen, insbesondere auch solche, die eine drahtlose Kommunikation gestatten.

Vorzugsweise bietet die Regelungseinrichtung 14 die Möglichkeit, in den Speichermitteln 53 unabhängig voneinander gleichzeitig mehrere Referenzzeitwerte abzuspeichern, die mit der aktuell erfaßten Regelungszeit t_{R} verglichen werden. Hier besteht dann die Möglichkeit, je nach Dauer der erfaßten Regelungszeit t_{R} unterschiedliche elektrische Diagnosesignale zu erzeugen und auszugeben. Man kann also verschiedene Diagnosestufen anzeigen und/oder verarbeiten, je nach Intensität der festgestellten Leckage.

Das Ausführungsbeispiel bietet dem Nutzer die Möglichkeit, den oberen Schaltwert p_{SO} und auch den unteren Schaltwert p_{SU} selbst einzugeben. Die Eingabe geschieht über die Eingabemittel 57. Zweckmäßigerweise ist die Regelungseinrichtung 14 allerdings so ausgelegt, dass nur der obere Schaltwert p_{SO} direkt eingegeben werden kann. Der untere Schaltwert p_{SU} wird von der Regelungseinrichtung 14 selbst bestimmt, auf der Basis eines Hysteresewertes Δp_{H}, der über die Eingabemittel 57 eingegeben werden kann. Der Hysteresewert Δp_{H} legt einen fiktiven unteren Grenzwert p_{UG} fest, bei dem es sich um denjenigen Unterdruck handelt, der nach der Erfahrung des Nutzers üblicherweise noch ausreichend ist, um einen Gegenstand 5 sicher festzuhalten.

Der untere Grenzwert p_{UG} bildet allerdings nicht den unteren Schaltwert p_{SU}. Dieser ergibt sich erst aus einer Addition eines Sicherheitsdruckwertes Δp_{S} zu dem unteren Grenzwert p_{UG}.

Der Sicherheitsdruckwert des Δp_{S} ist in den Speichermitteln 53 der Regelungseinrichtung 14 abgelegt und wird von dieser selbsttätig hinzu addiert.

Auf diese Weise ist insgesamt sichergestellt, dass unabhängig von auftretenden Toleranzen oder auch ungenauen Erfahrungswerten des Nutzers der untere Schaltwert p_{SU} eine ausreichende Höhe aufweist, um mit Sicherheit ein unerwünschtes Lösen des angesaugten Gegenstandes 5 auszuschließen.

Die interne Elektronik der Regelungseinrichtung 14 ist beim Ausführungsbeispiel überdies so ausgebildet, dass der obere Schaltwert p_{SO} und der untere Schaltwert p_{SU} alternativ auch durch einen Einlernprozeß festlegbar sind, ohne konkrete Eingabe bestimmter Druckwerte.

Eine bevorzugte Abfolge des Einlernprozesses sieht vor, dass zunächst ein im Saugkanal 35 herrschender erster Saugkanaldruck ermittelt wird, wenn die Arbeitsöffnung 8 und folglich die Saugkammer 12 des Sauggreifers 7 verschlossen ist. Anschließend oder zuvor wird ein zweiter Saugkanaldruck bei nicht abgedecktem, offenem Sauggreifer 7 ermittelt. Der zweite Saugkanaldruck kann alternativ auch in einem Zustand ermittelt werden, bei dem der Sauggreifer 7 durch einen leckagebehafteten Gegenstand 5 abgedeckt ist, also insbesondere durch einen die Arbeitsöffnung 7 nicht dicht verschließenden, schadhaften Gegenstand. Anschließend wird der Druckmittelwert aus dem ersten und dem zweiten Saugkanaldruck bestimmt. Aus diesem Druckmittelwert und einem hinzuaddierten Sicherheitsdruckwert wird dann der untere Schaltwert p_{SU} gebildet. Der obere Schaltwert p_{SO} wird gebildet aus dem ersten Saugkanaldruck abzüglich eines weiteren Sicherheitsdruckwertes, der mit dem vorgenannten Sicherheitsdruckwert Δp_{S} übereinstimmen kann.

Prinzipiell wäre es auch möglich, den Druckmittelwert und den ersten Saugkanaldruck auch ohne Berücksichtigung eines Sicherheitsdruckwertes als unteren Schaltwert und oberen Schaltwert anzusetzen.

Für die Initiierung der diversen Messaufnahmevorgänge können die bereits erwähnten Eingabemittel 57 dienen, wobei über das Display 55a eine Menüführung angezeigt werden kann.

Die geschilderten Maßnahmen ermöglichen eine kostengünstige Überwachung des Leckageverhaltens der Vakuumerzeugervorrichtung 1, ohne Notwendigkeit eines Zählens der Anzahl der Regelungsvorgänge. Die Anzahl der Regelungsvorgänge spielt bei der Auswertung und bei der Bestimmung der Diagnosesignale keinerlei Rolle.

## Patentansprüche

1. Verfahren zum Betreiben einer Vakuumerzeugervorrichtung (1), die eine Ejektoreinrichtung (27) aufweist, deren Einlass mit einem Luftversorgungskanal (32) und deren Saugseite (34) mit einem mit einem Sauggreifer (7) verbundenen Saugkanal (35) verbunden ist, und die eine zur Erfassung des im Saugkanal (35) herrschenden Unterdruckes dienende Druckerfassungseinrichtung (24) aufweist, wobei der im Saugkanal (35) herrschende Unterdruck dadurch geregelt wird, dass die Luftversorgung des Einlasses (29) zu einem Zeitpunkt t₁ abgeschaltet wird, wenn der Unterdruck einen oberen Schaltwert p_{SO} erreicht, und zu einem Zeitpunkt t₂, zu dem der Unterdruck auf einen unteren Schaltwert p_{SU} absinkt, erneut eingeschaltet wird, bis zu einem Zeitpunkt t₃ wieder der obere Schaltwert p_{SO} erreicht wird, **dadurch gekennzeichnet, dass** die zwischen dem Zeitpunkt t₁ des Abschaltens der Luftversorgung und entweder dem anschließenden Wiedereinschalten zu dem Zeitpunkt t₂ oder dem anschließenden neuerlichen Abschalten der Luftversorgung zu dem Zeitpunkt t₃ verstreichende Regelungszeit erfaßt wird und mit mindestens einem vorgegebenen Referenzzeitwert verglichen wird, um in Abhängigkeit vom Vergleichsergebnis ein elektrisches Diagnosesignal zu erzeugen.

2. Verfahren nach Anspruch 1, **dadurch gekennzeichnet, dass** ein Diagnosesignal erzeugt wird, wenn die Regelungszeit unter dem vorgegebenen Referenzzeitwert liegt.

3. Verfahren nach Anspruch 1 oder 2, **dadurch gekennzeichnet, dass** das Diagnosesignal als optisches und/oder akustisches Signal ausgegeben wird.

4. Verfahren nach einem der Ansprüche 1 bis 3 **dadurch gekennzeichnet, dass** das Diagnosesignal als elektrisches Signal ausgegeben wird, derart, dass es einer externen elektronischen Steuereinrichtung zuführbar ist.

5. Verfahren nach einem der Ansprüche 1 bis 4, **dadurch gekennzeichnet, dass** die erfaßte Regelungszeit mit mehreren unterschiedlichen Referenzzeitwerten verglichen wird, um je nach Dauer der Regelungszeit unterschiedliche elektrische Diagnosesignale zu erzeugen.

6. Verfahren nach einem der Ansprüche 1 bis 5, **dadurch gekennzeichnet, dass** der untere Schaltwert generierbar ist aus der Addition eines vorgegebenen Sicherheitsdruckwertes zur Differenz aus dem variabel vorgebbaren oberen Schaltwert und einem ebenfalls variabel vorgebbaren Hysteresewert.

7. Verfahren nach einem der Ansprüche 1 bis 6, **dadurch gekennzeichnet, dass** der obere Schaltwert und der untere Schaltwert durch einen Einlernprozess festgelegt werden, wobei (a) ein erster Saugkanaldruck bei verschlossenem Sauggreifer und ein zweiter Saugkanaldruck bei offenem oder durch einen leckagebehafteten Gegenstand abgedecktem Sauggreifer ermittelt werden, (b) der Druckmittelwert aus dem ersten und zweiten Saugkanaldruck gebildet wird, (c) der Druckmittelwert selbst oder zuzüglich einem Sicherheitsdruckwert zum unteren Schaltwert bestimmt wird und (d) der erste Saugkanaldruck selbst oder abzüglich eines Sicherheitsdruckwertes zum oberen Schaltwert bestimmt wird.

8. Vakuumerzeugervorrichtung, mit einer Ejektoreinrichtung (27), die einen mit einem Luftversorgungskanal (32) verbundenen Einlaß (29) aufweist und über eine Saugöffnung (34) verfügt, an die ein Saugkanal (35) angeschlossen ist, der mit einem Sauggreifer (7) verbunden oder verbindbar ist, ferner mit einer zur Erfassung des im Saugkanal (35) herrschenden Unterdruckes dienenden Druckerfassungseinrichtung (24), und mit einer elektronischen Regelungseinrichtung (14) zur derartigen Regelung des im Saugkanal (35) herrschenden Unterdrukkes, dass die Luftversorgung des Einlasses (29) abgeschaltet wird, wenn der sich aufbauende Unterdruck einen oberen Schaltwert erreicht, und erneut bis zum Erreichen des oberen Schaltwertes eingeschaltet wird, wenn der Unterdruck auf einen unteren Schaltwert absinkt, **dadurch gekennzeichnet, dass** die Regelungseinrichtung (14) über Regelungszeit-Erfassungsmittel (56) verfügt, durch die die zwischen dem Abschalten der Luftversorgung und entweder dem anschließenden Wiedereinschalten oder dem neuerlichen Abschalten der Luftversorgung verstreichende Regelungszeit erfassbar ist, dass die Regelungseinrichtung ferner über Vergleichermittel (54) verfügt, durch die die erfaßte Regelungszeit mit mindestens einem in Speichermitteln (53) abgelegten Referenzzeitwert vergleichbar ist, und dass die Regelungseinrichtung (14) über Ausgabemittel (55) verfügt, die in Abhängigkeit vom Vergleichsergebnis der Vergleichermittel (54) ein elektrisches Diagnosesignal ausgeben können.

9. Vakuumerzeugervorrichtung nach Anspruch 8, **dadurch gekennzeichnet, dass** in den Saugkanal ein in Richtung zur Saugöffnung (34) öffnendes und in Gegenrichtung sperrendes Rückschlagventil (42) eingeschaltet ist.

10. Vakuumvorrichtung nach Anspruch 9, **dadurch gekennzeichnet, dass** die Druckerfassungseinrichtung (24) an den zwischen dem Rückschlagventil (42) und dem Sauggreifer (7) verlaufenden Abschnitt des Saugkanals (35) oder direkt an den Sauggreifer (7) angeschlossen ist.

11. Vakuumerzeugervorrichtung nach einem der Ansprüche 8 bis 10, **dadurch gekennzeichnet, dass** in den Luftversorgungskanal (32) ein zwischen einer Offenstellung und einer Schließstellung umschaltbares und dadurch die Luftversorgung entweder einschaltendes oder ausschaltendes Steuerventil (36) eingeschaltet ist, das durch die Regelungseinrichtung (14) ansteuerbar ist.

12. Vakuumerzeugervorrichtung nach einem der Ansprüche 8 bis 11, **dadurch gekennzeichnet, dass** mit dem Saugkanal (35) ein Ausblaskanal (38) verbunden ist, in dessen Verlauf ein zwischen einer Offenstellung und einer Schließstellung umschaltbares Ausblasventil (37) eingeschaltet ist, das durch die Regelungseinrichtung (14) ansteuerbar ist.

13. Vakuumerzeugervorrichtung nach einem der Ansprüche 8 bis 12, **dadurch gekennzeichnet, dass** die Speichermittel (53) derart ausgebildet sind, dass darin gleichzeitig mehrere unterschiedliche Referenzzeitwerte abspeicherbar sind, derart, dass durch die Ausgabemittel (55) in Abhängigkeit vom Vergleichsergebnis unterschiedliche elektrische Diagnosesignale ausgebbar sind.

14. Vakuumerzeugervorrichtung nach einem der Ansprüche 8 bis 13, **dadurch gekennzeichnet, dass** die Regelungseinrichtung (14) über zur Eingabe von Daten dienende und insbesondere manuell bedienbare Eingabemittel (57) verfügt.

15. Vakuumerzeugervorrichtung nach einem der Ansprüche 8 bis 14, **dadurch gekennzeichnet, dass** die Regelungseinrichtung (14) zur Durchführung des Verfahrens nach einem der Ansprüche 1 bis 7 ausgebildet ist.

## Claims

1. Method of operating a vacuum generator device (1) which has an ejector device (27) with an inlet connected to an air supply duct (32) and a suction side (34) connected to a suction passage (35) linked to a suction gripper (7), and which has a pressure sensing device (24) serving to detect the vacuum prevailing in the suction passage (35), wherein the vacuum prevailing in the suction passage (35) is controlled by the air supply of the inlet (29) being switched off at a point in time t₁ when the vacuum reaches an upper switching value pₛₒ and switched back on again at a point in time t₂, at which the vacuum falls to a lower switching value pₛᵤ, until a point in time t₃ when the upper switching value pₛₒ is reached once more, **characterised in that** the control time elapsing between the time t₁ of switching off the air supply and either the subsequent restarting at point in time t₂ or the subsequent fresh switch-off of the air supply at point in time t₃ is detected and compared with at least one preset reference time value, in order to generate an electrical diagnostic signal based on the compared result.

2. Method according to claim 1, **characterised in that** a diagnostic signal is generated when the control time lies below the preset reference time value.

3. Method according to claim 1 or 2, **characterised in that** the diagnostic signal is output as a visual and/or audible signal.

4. Method according to any of claims 1 to 3, **characterised in that** the diagnostic signal is output as an electrical signal in such a way that it may be fed to an external electronic control unit.

5. Method according to any of claims 1 to 4, **characterised in that** the detected control time is compared with several different reference time values, in order to generate different electrical diagnostic signals depending on the duration of the control time.

6. Method according to any of claims 1 to 5, **characterised in that** the lower switching value may be generated from the addition of a preset safety pressure value to the difference of the variably presettable upper switching value and a similarly variable presettable hysteresis value.

7. Method according to any of claims 1 to 6, **characterised in that** the upper switching value and the lower switching value are determined by a teaching process wherein (a) a first suction passage pressure with suction gripper closed and a second suction passage pressure with suction gripper open or covered by a leakage-prone object are determined, (b) the pressure mean value is formed from the first and second suction passage pressure, (c) the pressure mean value itself or plus a safety pressure value for the lower switching value is determined and (d) the first suction passage pressure itself or minus a safety pressure value for the upper switching value is determined.

8. Vacuum generator device with an ejector device (27) with an inlet (29) connected to an air supply duct (32) and a suction port (34) to which is connected a suction passage (35) which is or may be connected to a suction gripper (7), also with a pressure sensing device (24) serving to detect the vacuum prevailing in the suction passage (35), and with an electronic control system (14) for such control of the vacuum prevailing in the suction passage (35) that the air supply of the inlet (29) is switched off when the vacuum building up reaches an upper switching value and is switched back on again until the upper switching value is reached once more, when the vacuum drops to a lower switching value, **characterised in that** the control system (14) has control time detection means (56) by which the control time elapsing between switching off the air supply and either the subsequent restarting or the subsequent fresh switch-off of the air supply may be detected, that the control system also has means of comparison (54) by which the detected control time may be compared with at least one preset reference time value stored in memory means (53), and that the control system (14) has output means (55) which are able to generate an electrical diagnostic signal based on the compared result of the means of comparison (54).

9. Vacuum generator device according to claim 8, **characterised in that** a non-return valve (42) inserted in the suction passage opens in the direction of the suction port (34) and closes in the opposite direction.

10. Vacuum generator device according to claim 9, **characterised in that** the pressure sensing device (24) is connected at the section of the suction passage (35) running between the non-return valve (42) and the suction gripper (7) or directly to the suction gripper (7).

11. Vacuum generator device according to any of claims 8 to 10, **characterised in that** a control valve (36) which may be controlled by the control system (14) is inserted in the air supply duct (32) and may be switched between an open position and a closed position, thereby either switching on or switching off the air supply.

12. Vacuum generator device according to any of claims 8 to 11, **characterised in that** there is connected to the suction passage (35) an exhaust passage (38), in the course of which there is inserted an exhaust valve (37), which may be switched between an open position and a closed position, and which may be controlled by the control system (14).

13. Vacuum generator device according to any of claims 8 to 12, **characterised in that** the memory means (53) are so designed that several different reference time values may be stored in them simultaneously in such a way that different diagnostic signals may be output by the output means (55) depending on the compared result.

14. Vacuum generator device according to any of claims 8 to 13, **characterised in that** the control system (14) has input means (57) for the input of data, being in particular manually operable.

15. Vacuum generator device according to any of claims 8 to 14, **characterised in that** the control system (14) is designed to implement the method according to any of claims 1 to 7.

## Revendications

1. Procédé de fonctionnement d'un dispositif de production de vide (1), qui présente un dispositif éjecteur (27) dont l'entrée est raccordée à un canal d'alimentation en air (32) et dont le côté d'aspiration (34) est raccordé à un canal d'aspiration (35) raccordé à une ventouse (7), et qui présente un dispositif de détection de pression (24) servant à la détection de la dépression régnant dans le canal d'aspiration (35), dans lequel la dépression régnant dans le canal d'aspiration (35) est régulée du fait que l'alimentation en air de l'entrée (29) est mise hors service à un moment t₁ lorsque la dépression atteint une valeur de commutation pₛₒ supérieure, et est mise de nouveau en service à un moment t₂ auquel la dépression diminue à une valeur de commutation pₛᵤ inférieure, jusqu'à ce qu'à un moment t₃ la valeur de commutation pₛₒ supérieure soit de nouveau atteinte, **caractérisé en ce que** le temps de régulation s'écoulant entre le moment t₁ de la mise hors service de l'alimentation en air et la remise en service consécutive au moment t₂ ou la nouvelle mise hors service consécutive de l'alimentation en air au moment t₃ est détecté et est comparé avec au moins une valeur de temps de référence prédéfinie afin de générer en fonction du résultat de comparaison un signal de diagnostic électrique.

2. Procédé selon la revendication 1, **caractérisé en ce qu'**un signal de diagnostic est généré lorsque le temps de régulation est inférieur à la valeur de temps de référence prédéfinie.

3. Procédé selon la revendication 1 ou 2, **caractérisé en ce que** le signal de diagnostic est émis en tant que signal optique et/ou acoustique.

4. Procédé selon l'une quelconque des revendications 1 à 3, **caractérisé en ce que** le signal de diagnostic est émis en tant que signal électrique de telle manière qu'il puisse être transmis à un dispositif de commande électronique externe.

5. Procédé selon l'une quelconque des revendications 1 à 4, **caractérisé en ce que** le temps de régulation détecté est comparé avec plusieurs valeurs de temps de référence différentes afin de générer selon la durée du temps de régulation différents signaux de diagnostic électriques.

6. Procédé selon l'une quelconque des revendications 1 à 5, **caractérisé en ce que** la valeur de commutation inférieure peut être générée à partir de l'addition d'une valeur de pression de sécurité prédéfinie à la différence de la valeur de commutation supérieure prescriptible de manière variable et d'une valeur d'hystérèse prescriptible aussi de manière variable.

7. Procédé selon l'une quelconque des revendications 1 à 6, **caractérisé en ce que** la valeur de commutation supérieure et la valeur de commutation inférieure sont fixées par un processus d'apprentissage, dans lequel (a) une première pression de canal d'aspiration est déterminée en cas de ventouse fermée et une seconde pression de canal d'aspiration est déterminée en cas de ventouse ouverte ou recouverte par un objet entaché de fuite, (b) la valeur moyenne de pression est formée à partir de la première et seconde pression de canal d'aspiration, (c) la valeur moyenne de pression même ou plus une valeur de pression de sécurité est déterminée pour une valeur de commutation inférieure et (d) la première pression de canal d'aspiration même ou moins une valeur de pression de sécurité est déterminée pour la valeur de commutation supérieure.

8. Dispositif de production de vide avec un dispositif éjecteur (27) qui présente une entrée (29) raccordée à un canal d'alimentation en air (32) et dispose d'une ouverture d'aspiration (34), à laquelle un canal d'aspiration (35) est raccordé, qui est ou peut être raccordé à une ventouse (7), de plus avec un dispositif de détection de pression (24) servant à la détection de la dépression régnant dans le canal d'aspiration (35), et avec un dispositif de régulation (14) électronique pour la régulation telle de la dépression régnant dans le canal d'aspiration (35), que l'alimentation en air de l'entrée (29) soit mise hors service lorsque la dépression se constituant atteint une valeur de commutation supérieure, et soit mise de nouveau en service jusqu'à l'atteinte de la valeur de commutation supérieure, lorsque la dépression diminue à une valeur de commutation inférieure, **caractérisé en ce que** le dispositif de régulation (14) dispose de moyens de détection de temps de régulation (56), par lesquels le temps de régulation s'écoulant entre la mise hors service de l'alimentation en air et la remise en service consécutive ou la nouvelle mise en service de l'alimentation en air peut être détecté, que le dispositif de régulation dispose de plus de moyens de comparaison (54), par lesquels le temps de régulation détecté peut être comparé avec au moins une valeur de temps de référence enregistrée dans des moyens de stockage (53), et que le dispositif de régulation (14) dispose de moyens d'émission (55) qui peuvent émettre en fonction du résultat de comparaison des moyens de comparaison (54) un signal de diagnostic électrique.

9. Dispositif de production de vide selon la revendication 8, **caractérisé en ce qu'**un clapet antiretour (42) verrouillant dans le sens antagoniste et ouvrant en direction de l'ouverture d'aspiration (34) est mis en service dans le canal d'aspiration.

10. Dispositif de vide selon la revendication 9, **caractérisé en ce que** le dispositif de détection de pression (24) est raccordé à la section s'étendant entre le clapet antiretour (42) et la ventouse (7) du canal d'aspiration (35) ou directement à la ventouse (7).

11. Dispositif de production de vide selon l'une quelconque des revendications 8 à 10, **caractérisé en ce qu'**une soupape de commande (36) commutable entre une position ouverte et une position fermée et mettant en ou hors service ainsi l'alimentation en air est mise en service dans le canal d'alimentation en air (32), laquelle peut être commandée par le dispositif de régulation (14).

12. Dispositif de production de vide selon l'une quelconque des revendications 8 à 11, **caractérisé en ce qu'**un canal de soufflage (38) est raccordé au canal d'aspiration (35), dans l'étendue duquel une soupape de soufflage (37) commutable entre une position ouverte et une position fermée est mise en service, laquelle peut être commandée par le dispositif de régulation (14).

13. Dispositif de production de vide selon l'une quelconque des revendications 8 à 12, **caractérisé en ce que** les moyens de stockage (53) sont réalisés de telle manière que plusieurs valeurs de temps de référence différentes peuvent être stockées dedans simultanément de sorte que différents signaux de diagnostic électriques puissent être émis par les moyens d'émission (55) en fonction du résultat de comparaison.

14. Dispositif de production de vide selon l'une quelconque des revendications 8 à 13, **caractérisé en ce que** le dispositif de régulation (14) dispose de moyens d'entrée (57) commandables en particulier manuellement et servant à l'entrée de données.

15. Dispositif de production de vide selon l'une quelconque des revendications 8 à 14, **caractérisé en ce que** le dispositif de régulation (14) est réalisé pour la réalisation du procédé selon l'une quelconque des revendications 1 à 7.
